# EUROPEAN PATENT APPLICATION

(11) **EP 0 594 919 A1**
(43) Date of publication of application: **04.05.1994**
(21) Application number: 92830587.9
(22) Date of filing: 28.10.1992
(51) Int. Cl.: H04N 7/08, H04H 9/00

(54) **A system for transmitting digital signals over video signals, for instance for detecting the broadcast of television programs**

(71) Applicant: SOPHOS SISTEMI S.r.l., I-10133 Torino (IT)
(72) Inventor: Bollattino, Marco, I-10099 San Mauro Torinese (Torino) (IT); Cafasso, Franco, I-10025 Pino Torinese (Torino) (IT); Cerutti, Gianfranco, I-10147 Torino (IT); Cibrario, Ivan, I-10078 Venaria Reale (Torino) (IT)
(74) Representative: Bosotti, Luciano

(57) **Abstract**

A digital signal (14) which identifies the characteristics of a television transmission replaces one of the lines of the frames of the video signal proper (16) of the signal broadcast. The coding is preferably carried out according to a redundancy system with the same informative message being transmitted (20) in successive frames, preferably in both direct form and in complementary form, in order to avoid the risk of a video signal being interpreted as the coded signal. The digital signal (14) preferably includes an introduction or preamble (18) which identifies the signal as such and which, by means of an initial constant-level band (18a), also provides a reference for synchronising the receiver. Alternatively the reference may be derived by an examination of a fixed data sequence, for example, that constituting the preamble itself. The informative message may be divided into several portions, each to be conveyed by a respective digital signal (14), and an end-of-message flag (20b) enables the portion of the message concerned to be identified upon receipt and, where appropriate, indicates whether it is transmitted in direct or complementary form. The same result may also be achieved by means of a set of control data transmitted instead of a single flag. The digital signal is preferably transmitted at a symbol frequency slow enough not to lead to significant alterations even as a result of the passage of the coded signal through standard, non-professional recording systems.

## Description

The present invention relates to systems for transmitting (and hence, in particular, for receiving) digital signals superimposed on video signals.

The invention has been developed with particular attention to its possible use for checking that predetermined television transmissions have been broadcast.

This requirement is of particular interest, for example, in the television advertising sector in which the producer concerned with the broadcasting of an advertisement (a so-called commercial "spot") and/or the advertising agency which has produced it, wish to be able to check that the advertisement has actually been broadcast for the predetermined length of time, with good reception quality and, above all, within the period of time actually selected.

The same requirement is also experienced in other sectors, for example, within the scope of activities of bodies which monitor television programmes, for example, to check that the spaces reserved for information relating to certain events actually correspond to those provided for.

Up to now, these requirements have not been met in a satisfactory manner, particularly in terms of the cheapness of the service.

In practice, the checking and certification of the fact that certain advertisements or particular programmes have actually been broadcast with good quality for a certain length of time and at the time envisaged is left to specialised bodies which perform these activities by means of panels of operators; the operators watch the television broadcasts continuously and note data relating to transmissions of specific interest. The data thus collected, usually on forms, are then processed systematically to provide the information required by the customer.

Clearly, this method requires a large amount of work and thus is necessarily expensive.

In order to try to automate this function, at least to a certain extent, it has been proposed to set up equipment which can detect and record television broadcasts and recognise therein certain reference frames for subsequent comparison with sample frames kept in a data bank. The purpose of this is to recognise, generally according to the result of a probability comparison, the transmission which is being broadcast at a certain moment and then to derive the necessary information.

Clearly, this method is also unsatisfactory both because the necessary processing equipment is extremely complex and because of the need to form a very extensive bank of reference data, particularly if the geographical areas monitored are fairly large.

The present invention aims to satisfy the requirements set out above in an entirely different way, that is, by associating with the transmission broadcast a certain informative message which is conveyed in the form of a string of digital characters identifying the transmission and all the parameters of interest relating thereto. This informative message can then be picked up and recorded automatically at the reception stage to provide the monitoring parameters mentioned above. This all takes place according to a sequence which can be automated, particularly during the processing of the results and, more importantly, without the need necessarily to provide preliminary information on the characteristics of the transmissions to be broadcast, that is - in practice - without the need necessarily to provide an informative structure such as the data bank used in the solutions which recognise the frames of transmissions.

As is well known, the solution of transmitting digital (numerical) signals superimposed on a video signal has already been used many times in the past, for example, for broadcasting the information service known in Italy as "Televideo" or in Europe as "Teletext".

In defining a solution which can actually effectively satisfy the basic requirements of the present invention, however, it is necessary to take account of various factors.

In the first place, it seems preferable that the information to be recognised during the broadcast should be incorporated in the initial programme before it is made available to the broadcasting body; in fact it is desirable for the information already to be present, for example, in the video cassette which an advertising agency supplies to the broadcaster who is to broadcast it. In view of the fact that the substrates in question, such as those used by advertising agencies, particularly in the local broadcasting sector, do not necessarily satisfy professional requirements as regards the quality of the signal, particularly in terms of its pass band, it is desirable to provide a solution in which the information can be inserted in the video signal without particular difficulty and without significantly detracting from the performance of the system, even if the signal with the coded information is intended to be stored and transferred onto substrates and systems of an amateur nature.

Secondly, it seems essential that the coded information inserted in the video signal is not altered (or even deleted) during its transfer through radio relay systems for local-area broadcasting. In fact, it is known that these radio relay systems (and many of the chains for processing and transmitting broadcasting signals in general) have (and are to be equipped in future to an ever greater extent with) devices for eliminating noise and interference.

It is therefore necessary to arrange for the coded information not to run the risk of being interpreted as noise or interference by these devices and thus being deleted when the signal is regenerated.

This consideration also excludes the possibility of transmitting the information during the retrace intervals (that is, the "blanking" intervals) since these intervals are often used by the radio relay chains or by other devices for processing the video signal in order to transmit auxiliary information relating to the operation of the system or of the device.

This fact leads to the preferential selection of transmitting the information on the video signal proper; for this purpose, it is necessary to take account of the fact that the video signal may be processed during the regeneration stage, for example, by devices which provide for frame storage, with a consequent modification of the video signal even as regards the arrangement of the lines within each frame or as regards the synchronisation of the individual line.

In general, it is necessary to prevent the system from wrongly interpreting a video signal having a particular time curve as a coded signal, at least under certain conditions, and consequently outputting an erroneous signal.

The object of the present invention is therefore to provide a solution to the problem of detecting the broadcasting of certain television transmissions whilst avoiding the disadvantages of the known solutions mentioned above and at the same time safely and reliably preventing the further problems mentioned specifically with reference to the manipulation to which video signals are ever more frequently subjected with a view to their being broadcast.

According to the present invention, this object is achieved by virtue of a system having the specific characteristics recited in the following claims.

The invention will now be described, purely by way of non-limiting example, with reference to the appended drawings in which:
Figure 1 shows schematically, in the form of a time graph, a possible time curve of a video signal (for precision, of one line of the video signal) which is intended to be used in a system according to the invention,
Figures 2 and 3 show schematically the possible layouts of the transmission (or coding) device of the system according to the invention, and
Figure 4 shows, again in the form of a block diagram, the possible structure of a receiver for use in a system according to the invention.

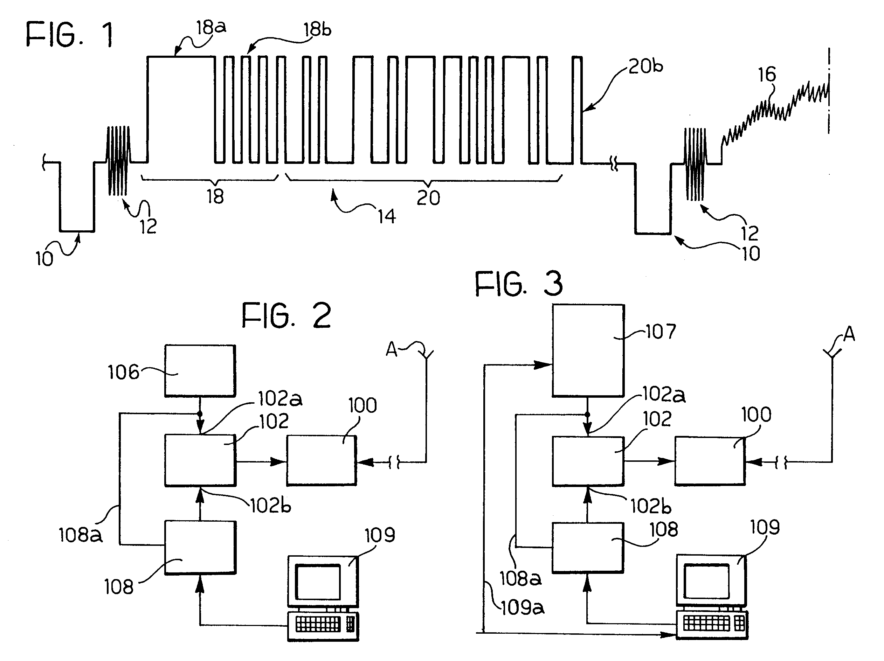

Figure 1 shows a typical time curve of a video signal which conveys coded information according to the basic principle of operation of the invention.

More precisely, the signal curve relates to one line of the video signal. The following elements can be distinguished in the signal:
- a synchronisation pulse 10,
- a so-called colour burst signal 12, and
- a coded binary signal 14 which, in the line used for transmitting the coded information, replaces the "video signal proper" (luminance and chrominance) which is shown schematically at 16 with reference to the signal relating to the line following the line with which the coded information is associated.

In other words, the system according to the invention provides for a digital signal (14) to be transmitted on a video signal by arranging for the digital signal to be in the form of a string of symbols (18, 20, 20b), typically binary signals, corresponding to different logic levels ("0" and "1") attributed to the video signal proper 16.

In general, the coding effected according to the invention conforms to all the other characteristics normally present in the television signal (back-porch level, etc...). The coded signal is preferably in the form of a string of logic signals which can assume two different levels, "0" and "1" respectively, of which the first corresponds to the black luminance level and the second corresponds to a grey, and hence lower, level than that which identifies the white level of a normal television signal.

Upon closer examination, it is possible to distinguish in the signal 14:
- a so-called introduction or preamble 18 constituted by a certain number (for example, from 0 to 7) of high-level logic signals or bits, generally indicated 18a, forming a so-called initial white bar in the signal (which is intended to be used for synchronisation purposes, as will be explained further below) and a second set of bits 18b (the preamble proper) including, for example, 8 bits in alternating sequence "0", "1", "0", "1", etc. Alternatively, if it is considered advantageous to do so, the signal 18a may be omitted and, in this case, the synchronisation functions are carried out on the basis of the signal 18b,
- a coded signal 20 including, for example, 32 coded signal bits for each transmission line, and
- a so-called flag 20b, for example, of 2 or 8 bits.

In general, the string of coded binary signals (that is, the preamble 18, the informative message proper 20, and the flag 20b together) is transmitted at a digit frequency (a bit rate) corresponding to a relatively narrow pass band compared with the overall bandwidth of the video signal. For example, an advantageous selection may be that of a bit rate of the order of 1 MHz.

The selection of such a frequency ensures that the coded signal is not significantly altered even as a result of its passage through and/or storage in systems and on substrates of a non-professional standard which therefore have considerable limitations on the video band.

The need to prevent the receiver which detects the messages at the reception stage from being able to interpret wrongly a video signal proper as a coded message and hence trying to decode it as such is satisfied in the system of the invention by means of a set of measures which provide for:
- the transmission of the preamble 18, which is repeated in an identical manner in each coded message before each informative message proper, and
- the transmission of the coded messages according to a general redundancy system in which the same informative message is repeated in at least two successive frames (usually immediately consecutive frames).

As a result of this, the receiver will, in general, identify as coded messages to be read, only those line signals in which it has succeeded in recognising the presence in two successive (preferably consecutive) frames, after the synchronisation pulse 10 and the colour burst 12, of the preamble 18 followed by the relative informative message 20. Moreover, in the currently preferred embodiment, the system of the invention provides for the informative message 20 not to be presented in an identical manner in the second transmission but in a processed form produced according to a fixed criterion, for example, in a complementary form (in practice, by the repetition of the informative message with logic signals "0" and "1" where, in the same message transmitted the first time, there were logic signals "1" and "0", respectively).

Naturally, different selections may also be used, for example, by deciding not to make all the bits of the informative message complementary, but only every other bit, or by deciding to adopt different laws of manipulation which should not - of course - be such as to cause the informative content of the message itself to be lost.

This modification of the coded message between the first and second transmissions is intended further to reduce the likelihood of the receiver wrongly interpreting as coded messages video signals proper which have the same curves in successive frames, as may occur when stationary images (typically monoscope images) or slowly-changing images are transmitted.

The Applicant has found by experience that a coded message which can be transmitted on a single video signal line may be insufficient for optimal usage of the system according to the invention. With reference to the symbol frequency quoted above and to the normal television standards, it is in fact possible to send a coded message with a length of the order of 32 bits on a single video-signal line.

In order to enable the coded message to transfer full information relating to the transmission with which the message is associated (the origin of the advertisement, its content, the company on behalf of which the advertisement is broadcast, the advertising agency which was responsible for the preparation of the advertisement, etc.) it seems preferable to be able to have information strings including, for example, 64 bits. For this reason, each individual coded message is preferably divided into two parts, each including half the full message, that is, 32 bits altogether. If it is necessary to increase the quantity of data transmitted, even considerably, and it is desired to make the certification of the duration of the event detected more accurate, it is possible to use a more elaborate transmission scheme which provides, for example, in the following order, for:
- the initial transmission of a set of messages for synchronising the receiver and arranging it for the acquisition of the information portion of the message and for compensating for any delays intrinsic in the reception algorithms,
- the transmission of the informative portion of the message by means of a variable number of strings constructed according to the parameters already specified above, in which the flag 20b is replaced by a longer set of control bits,
- the transmission, for example, at one frame per second, of packets of information alternating with intervals of video signals without identification, which have the purpose of keeping the receiver synchronised and enabling the "event in progress" situation to be checked,
- the final transmission of a set of epilogue messages, for example, for a continuous period of one second to confirm the correct conclusion of the event.

Naturally, although the foregoing quantitative references are preferred, they should in no way be interpreted in a limiting sense for the purposes of the implementation of the invention.

In view of the selection (which is made for the reasons explained above) of repeating each message 20 twice, firstly directly and secondly in a modified, for example, complementary manner, it is possible to adopt a scheme in which a certain informative message is divided into two halves and in which, firstly, the first half is transmitted in direct form and then in complementary form, and then the second half is transmitted in direct form and finally in complementary form. For this purpose, it is possible also to use the flag region indicated 20b to insert a string of characters (typically 2 bits) which identify the portion of the message concerned.

By way of example, it will be assumed that a coded message to be transmitted can be expressed as a hexadecimal character string in the following form:
1234567890ABCDEF
(that is, in the form of 16 hexadecimal digits, equal to 64 bits). The transmission will thus take place in the following manner:
- first frame - 12345678+00
   (the first half of the message in direct form with an identification flag 00),
- second frame - EDCBA987+10
   (the first half of the datum in complementary form with an identification flag 10),
- third frame - 90ABCDEF+01
   (the second half of the message in direct form with an identification flag 01), and
- fourth frame - 6F543210+11
   (the second half of the datum in complementary form with an identification flag 11).

Above all, this transmission scheme has the advantage that it enables the message transmitted by any line which may be lost due to transmission interference to be reconstructed, if it is considered advantageous to do so.

In fact, any lost line, as well as its message, can be reconstructed from the line which constitutes its redundant replica (direct or complementary, according to the nature of its identification flag).

The diagram of Figure 2 illustrates in general terms the structure of a coding system for inserting the coded messages described above into a programme which is to be broadcast on a television network.

As already indicated above, an important characteristic of the invention is that it can be applied to the basic programme which is to be broadcast (for example, by its coding onto a video cassette which an advertising agency sends to a broadcaster in order for the advertisement to be broadcast). Consequently, the coding equipment does not necessarily have to be available to the broadcaster; in particular, the bodies supplying the transmissions can easily equip themselves with coding equipment and supply the coded messages with the desired information directly to the broadcaster.

The block diagrams of Figures 2 and 3 show a device, indicated 100, for generating video programmes for subsequent broadcasting, even in a different locality, by means of an antenna A or a cable broadcasting network. In general this may be constituted by a video recorder, for example, installed at the broadcaster's premises for supplying his broadcasting equipment.

The device 100 may be supplied by a video-signal mixing circuit 102 with two inputs of which the first 102a is supplied with a video signal corresponding to the transmission (for example, an advertising spot) with which a coded message is to be associated; in particular, this signal may come, for example, from a video recorder 106 (Figure 2) in which a cassette with a recording of the transmission or advertising spot to be coded is inserted. Alternatively, for example, if assembly of the advertisements is automated, the video recorder 106 (Figure 2) may be replaced by an assembler (107) (Figure 3).

The other input 102b of the mixer 102 is supplied with the output signal generated by a coding circuit 108.

This may, to advantage, be constituted by a hardware board controlled by a software device (a microprocessor, a miniprocessor, or a personal computer 109) which, according to known criteria (which do not therefore need to be described in detail herein, since they can easily be implemented by an expert in the art), performs essentially the following functions:
- locking onto the frame and line synchronisation of the video signal coming from the source 106 (via the line 108a),
- isolating a predetermined line (for example, the line 30 or, in general, the line N) of each frame, of consecutive sets of frames or of one in every M successive frames, and
- inserting a coded signal, such as the signal indicated 18, 20 and 20b in Figure 1, in this line, to replace its video signal (16 again in Figure 1).

This is all done in accordance with one of the redundancy transmission systems described above.

In particular, the messages which are to be inserted in the video signal can be set out in the system by means of the personal computer 109. The messages are transferred to the hardware board 108 which in turn transfers them to the mixer 102 in order to code the video signal coming from the video recorder 106 (or from another source). With reference to Figure 3, which shows an automated assembly system, instead of being introduced into the PC (109) manually, the messages may be made available thereto by means of the bidirectional communication channel (109a) which, in this case, also performs the task of synchronising the insertion of the data in the assembly procedure.

With reference to current European standards which provide for the transmission of 25 frames per second, the solution described above by way of example enables the transmission of up to 25 coded messages of 32 bits each second - with the use of one line for each successive frame. Naturally this is a very satisfactory level both as regards the overall information flow and, in particular, as regards the need precisely to identify the start and the finish, that is the "screening" of a certain programme broadcast.

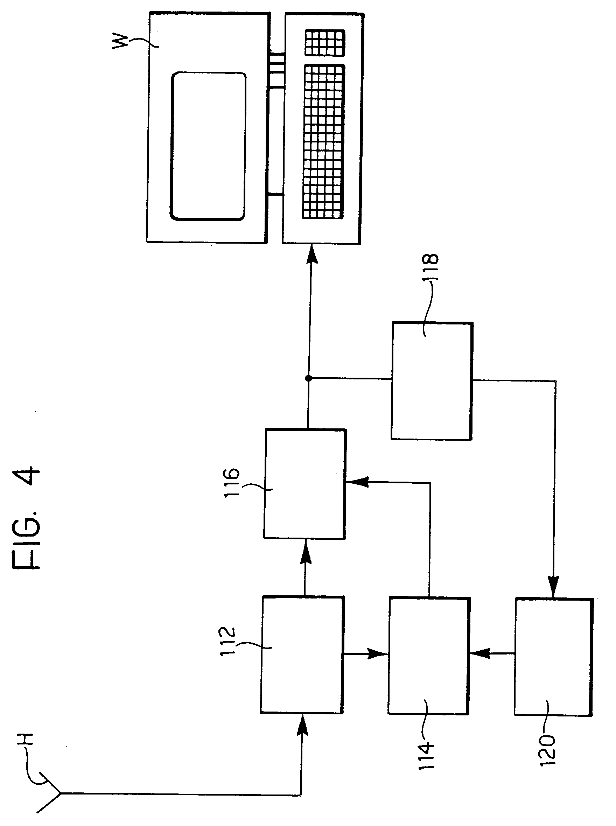

The decoding circuit shown in Figure 4 is constituted essentially by a television receiver which receives (for example, by means of an antenna H) the signal which has been broadcast (or transmitted by cable) by the broadcaster to whom the coded programme was supplied, as indicated in Figure 2. In practice, the receiver 112 is a normal television tuner which can isolate from the television signal received, the lines carrying the coded messages.

The receiver 112 performs this function by means of a block 114 for extracting synchronisation signals (frame and line) which can be be locked (preferably in the manner described below) onto the frame and line synchronisation of the signal received, thus supplying to a reading block 116 the timing signals which enable the latter to isolate from the signal output by the receiver 112 the lines in which it recognises the presence of the preamble 18, and then to read and decode the successive messages 20 according to one of the general redundancy systems given above (that is, the dual transmission of the same message, once in direct form and once in complementary form, with the message divided, for example, into two halves for transmission in two successive frames).

The block 116 can recognise each transmission with its identification data (for example, the broadcasting source, the company interested in the broadcasting of the transmission, the advertising agency which has produced the programme, etc.) from the coded message, naturally on the basis of a reading programme produced from time to time (according to criteria within the capabilities of an expert in the art which do not need to be described herein) according to the specific requirements of use, and can also detect, for recording purposes, the moments at which the broadcast starts and finishes.

If the first of the insertion systems given above is used, the same coded message will in fact be transmitted at a certain frequency during the broadcasting of the transmission in question. The repeated receipt of the same informative message will thus be interpreted by the receiver 112 as indicative of the continuing broadcasting of a certain transmission. A change in the code received or the absence of a code after a certain moment will identify the fact that the preceding transmission has ended and that the broadcaster has started to broadcast a new transmission (or a transmission which is coded with a different code or without a code). If the second system is used, all this information may to advantage be derived from an analysis of the information/control packets included in the message received.

The data obtained by the reading block 116 may be transmitted to a more complex processing circuit W (for example, a personal computer or the like) which can provide continually updated and precise statistics on the broadcasting of the transmissions.

In particular, this processing system can detect and record the moment at which each broadcast starts and finishes, by means of its clock which may be synchronised periodically with sample signals (if necessary received by radio, even from the broadcaster of the television signals) so as automatically to supply precise indications that a certain transmission has been screened for a certain period of time within a certain time band, and also to provide, for example, for corresponding accounting documents to be issued so that, for example, debit notes can be sent out to the clients by the broadcaster.

In the currently preferred embodiment, the receiver according to the invention is intended also to take account of at least two other extremely important factors. More precisely, this concerns the fact that, as a result of its passage through processing systems during its transmission from the source point to the reception point (for example, by transmission by radio relay systems with repeators having regenerative functions for eliminating noise and interference), the video signal may be modified both as regards the location of the coded line within the frame (particularly as a result of its passage through systems with frame storage) and as a result of its passage through systems which modify the location of the video signal (that is, of the signal 16 with reference to Figure 1) relative to the synchronisation pulse 10; clearly these latter systems will affect the position of the coded message 18, 20, 20b relative to the synchronisation pulse 10, in relation to time.

As regards the first aspect, although originally located on the line N at the coding stage (see the diagrams of Figures 2 and 3), the informative message may actually end up on a different line upon receipt.

Tests carried out by the Applicant have established that the line displacement in question usually involves a certain number of lines, typically 5 lines, around the original line.

This means in practice that, if the coded message 18, 20, 20b was inserted on line N, it may, at the reception stage, be situated at most within the range between line N - K and line N + K where K is typically equal to 2.

For this reason, a device 118 is to advantage associated with the receiver 112 for detecting the absence of a coded message in the signal received for a certain period of time (for example, 500 milliseconds).

If the absence of a coded signal on the line N is detected, the device 118 acts on the line-synchronisation locking circuit 114 by means of a module 120 to start up an automatic high-frequency scanning mechanism so that the circuit 114 no longer extracts only the line N but, on the contrary, performs a cyclic reading pattern, for example of this type:
- read line N + 1 for 2 frames
- read line N + 2 for 2 frames
- read line N for 2 frames
- read line N - 1 for 2 frames
- read line N - 2 for 2 frames
- read line N for 2 frames
and so on until it stops the scanning movement automatically when the presence of the coded signal is detected and brings the synchronisation signal to the line on which the event has been found. Naturally, the scanning mechanism described above relates to the example of a possible displacement band including 5 lines centered on the line N; as stated, the Applicant has found that this solution is wholly satisfactory in all current situations.

It should also be noted that the scanning mechanism described above is intended to ensure a greater scanning frequency in the central region of the band of possible variation and particularly in the line N in which the coded signal is in any case most likely to be present. Since the device 118 is implemented in software form, it is in any case possible to intervene at any time to modify, even radically, the scanning parameters which are supplied solely hypothetically herein.

As regards the second problem (the possible displacement of the coded message relative to the synchronisation pulse 10 in relation to time) it is envisaged that, as regards the reading of the coded message, the circuit 114 will not be synchronised on the synchronisation pulse 10 (which may nevertheless be used for a first general synchronisation of the receiver circuit) but rather on the white pulse or bar 18a corresponding to the first portion of the introduction or preamble to the coded message and, more specifically, on the trailing edge of the white band (the transition between the portion 18a and the portion 18b of the preamble). If it is decided not to transmit the white bar 18a, the receiver is synchronised by an examination of the leading and trailing edges of the first bit of the preamble which is at logic level 1 and by a measurement of the time interval elapsing between the two edges.

In fact it can be shown that, since the position of the white band 18a and, in particular of its trailing edge, relative to the coded message 20, 20b, is in fact set at the coding level of the signal, it is not in any case modified even when the distance between the coded message 18, 20, 20b and the synchronisation pulse 10 is modified, for example, as a result of its passage through a repeater. Clearly, the same considerations also apply to the preamble 18b as well as to the white bar. In any case, the receiver can thus lock onto the coded message in the correct phase relationship so as to be able to read it.

Naturally, the principle of the invention remaining the same, the details of construction and forms of embodiment may be varied widely with respect to those described and illustrated without thereby departing from the scope of the present invention.

## Claims

1. A system for transmitting digital signals (18, 20 20b) on video signals arranged in frames and lines, in which each line includes a portion (16) which is intended to convey the video signal proper, characterised in that the digital signals are present in the video signal in the form of a string of symbols (18, 20, 20b) corresponding to different logic levels of the video signal proper.

2. A system according to Claim 1, characterised in that the digital signals (18, 20, 20b) are constituted by binary symbols associated with two different logic levels of the video signal proper.

3. A system according to Claim 1 or Claim 2, characterised in that one of the logic levels corresponds substantially to the level of the black of the video signal proper.

4. A system according to any one of Claims 1 to 3, characterised in that one of the logic levels corresponds to a grey level of the video signal proper.

5. A system according to any one of Claims 1 to 4, characterised in that the string of symbols is transmitted at a symbol frequency of the order of one MHz.

6. A system according to any one of Claims 1 to 5, characterised in that the same information is associated with digital signals (18, 20, 20b) present in at least two lines of the video signal, according to a general redundancy system.

7. A system according to Claim 6, characterised in that the same information is associated with the two lines of the video signal in the form of first and second digital signals, the second digital signal constituting a replica of the first digital signal in a modified form produced according to a predetermined law.

8. A system according to Claim 7, characterised in that the second digital signal includes a string of binary characters (20) constituting a complementary replica of the homologous string (20) included in the first digital signal.

9. A system according to any one of Claims 1 to 8, characterised in that the string of symbols (18, 20, 20b) includes a preamble portion (18) with a predetermined configuration of logic symbols which is used in an unaltered manner regardless of the information conveyed by the string (18, 20, 20b).

10. A system according to Claim 9, characterised in that the preamble portion (18) includes a portion (18a) with symbols corresponding to a uniform logic level of the video signal proper, so as to form a band which can be used as a synchronising reference for the reading of the digital signal.

11. A system according to Claim 9, characterised in that the preamble portion (18) includes a portion (18b) with symbols corresponding to a known sequence of logic levels of the signal proper such that it can be used as a synchronising reference for the reading of the digital signal.

12. A system according to any one of Claims 1 to 11, characterised in that, in order to transmit a predetermined informative message, the predetermined informative message is divided into at least two portions which are conveyed by digital signals (18, 20, 20b) present in at least two lines of the video signal.

13. A system according to any one of Claims 1 to 11, characterised in that, in order to transmit a predetermined informative message, the message is divided into a variable number of portions which are conveyed, with the addition of further control packets disposed variously in the course of the event, by means of digital signals (18, 20, 20b) present on a single line in a variable number of video frames which are not necessarily consecutive.

14. A system according to any one of Claims 6, 7, 8 or 12 and 13, characterised in that the at least two lines are included in successive frames of the video signal.

15. A system according to any one of Claims 6, 7, 8, 12, 13 and 14, characterised in that the digital packet (20) includes at least one portion (20b) which identifies:
- the role of the signal within the redundancy system adopted (e.g. datum or complement),
- the type of packet (data or control),
- for a data packet, the position or serial number of the packet within the sequence of data carried.

16. A system according to any one of Claims 1 to 15, characterised in that it includes a transmission encoder including:
- a source (106; 107) of a video signal arranged in frames and lines,
- means (108 and 109) for generating the digital signals, and
- mixing means (102) which are intended to be supplied with the video signal coming from the source (106; 107) and with the digital signals (102), the mixing means (102) having associated synchronisation means for isolating within the video signal a certain line (N) in successive frames in order to convey the digital signals on the line in successive frames of the video signal.

17. A system according to any one of Claims 1 to 16, characterised in that it includes at least one receiver (112) associated with:
- means (114) for extracting the frame and line synchronisation from a video signal received (112), and
- means (116) for isolating at least one predetermined line in successive frames of the video signal in order to identify the string of symbols (18, 20, 20b) consisting of different logic levels of the video signal proper.

18. A system according to Claim 17 and any one of Claims 6, 7 and 8, characterised in that the receiver (112) has associated means (116) for isolating the two lines of the video signal, and identifying the presence of the first and second digital signals on the two lines.

19. A system according to Claim 12 and Claim 17, characterised in that the receiver (112) has associated means (116) for isolating the two lines and identifying the presence of at least two portions of a predetermined informative message on the two lines.

20. A system according to Claim 13 and Claim 17, characterised in that the receiver (112) has associated means (116) for isolating the sequence of packets.

21. A system according to Claim 15 and Claim 17, characterised in that the receiver includes means (116) for identifying the presence of the identification symbol (20b) in the at least two lines, and means (116) for reconstructing from the digital signals present in the at least two lines and on the basis of the at least one symbol (20a), an informative message resulting from the combination of digital signals present on the at least two lines of video signal.

22. A system according to Claim 12 and Claim 21, characterised in that the receiver (112) is configured in a manner such that, as a result of a failure to receive the line corresponding to one of the two portions of the predetermined informative message, it reconstructs the missing message portion from the other portion received, on the basis of the identification symbol (20b).

23. A system according to one of Claims 10 or 11 and Claim 17, characterised in that the receiver (112) has associated means (116) for extracting the line synchronisation of the video signal, the means being sensitive to the presence of the band (18a) of symbols which are at a uniform logic level or of the string of known symbols (18b) in the preamble portion (18) of the string of symbols (18, 20, 20b).

24. A system according to Claim 23, characterised in that the means (116) for extracting the line synchronisation can lock onto the trailing edge of the band (18a) or onto the first bit belonging to the sequence (18b) which is at logic level 1 and is of a length within the time tolerances fixed for the transmission.

25. A system according to any one of Claims 17 to 23, characterised in that the receiver (112) has associated means (116) which extract the line synchronisation and can detect (118) a failure to receive digital signals on a given line (N) in successive frames of the video signal for a predetermined period of time, and means (120) for controlling the extraction of the line synchronisation in order, as a result of the lack of reception, to start the scanned reading of a predetermined band (N + K, N - K) of adjacent lines in successive frames, in order to find the coded message on one of the lines in the band.

26. A system according to Claim 25, characterised in that the band is centered on the given line (N).

27. A system according to Claim 25 or Claim 26, characterised in that the scanning band (N - K, N + K) involves five lines.

28. A system according to any one of Claims 25 to 27, characterised in that the control means scan the band of lines with the given line (N) being scanned at a greater frequency than the adjacent lines (N - K, ..., N - 1; N + 1, ..., N + K).

29. A system according to any one of the preceding claims, characterised in that it is associated with an automatic programme assembly structure (107), preferably of the computerised type, in order to insert the digital signals automatically.

30. A system according to Claim 29, characterised in that the system and the assembly structure (107) are connected by means of a bidirectional channel (109a) which is also intended to convey the information for synchronisation with the assembly method used by the assembly structure.
